# EUROPEAN PATENT SPECIFICATION

(11) **EP 3 851 070 B1**
(45) Date of publication and mention of the grant of the patent: **24.01.2024**
(21) Application number: 19859885.6
(22) Date of filing: 14.06.2019
(51) Int. Cl.: A61C 8/00

(54) **IMPLANT STRUCTURE**
IMPLANTATSTRUKTUR
STRUCTURE D'IMPLANT

(30) Priority: 10.09.2018 KR 20180107560; 10.09.2018 KR 20190038255
(43) Date of publication of application: 21.07.2021
(73) Proprietor: Ha, Myung Heon, Gyeonggi-do 18132 (KR)
(72) Inventor: Ha, Myung Heon, Gyeonggi-do 18132 (KR)
(74) Representative: J A Kemp LLP
(86) International application number: PCT/KR2019/007215
(87) International publication number: WO 2020/054948

(56) References cited:
- KR-A- 20090 080 572
- KR-A- 20140 120 032
- KR-A- 20140 130 773
- KR-A- 20140 130 773
- KR-U- 20130 002 210
- KR-Y1- 200 470 574

## Description

The present invention relates to an implant structure.

In general, an implant is an aspect of an artificial tooth and is an artificial prosthesis that restores functions such as mastication, aesthetics, and pronunciation. After implantation is completed, implants have an appearance and function that are difficult to distinguish from natural teeth, and their lifespan is also semi-permanent depending on the state of management, so they are widely used.

Such an implant may largely include a fixture, an abutment and a retainer.

The fixture is a part that is implanted and fixed in an alveolar bone, the retainer is a part that fixes a denture structure by combining with the denture structure, and the abutment is a part that connects the fixture and the retainer.

Specifically, a conventional implant has a structure in which the lower side of the abutment is screwed to or integrally configured with the fixture, and the retainer is fixed to the upper side with an adhesive.

KR-10-2014-0130773, on which the two part form of claim 1 is based, discloses an implant structure, comprising: a retainer (referred to therein as an "abutment") for fixing a denture structure by combining with the denture structure; a fixing portion (referred to therein as a "fixture") comprising a fixture (referred to therein as an "implantation portion) for implantation in an alveolar bone of a gum, and an abutment (referred to therein as a "coupling portion") at an upper portion of the fixture, wherein the abutment connects the fixture to the retainer, and the abutment is integrally formed with the fixture; and a ring-shaped coil spring (referred to therein as a "binder") to provide elastic force to the retainer and the abutment, wherein a seating portion on which the coil spring is seated is formed inside the retainer.

However, there are some problems that it is difficult to remove the retainer from the abutment as the retainer is fixed to the upper portion of the abutment with an adhesive, and it is difficult to precisely position it in the user' mouth since the angle formed by the tooth attached to the upper portion of the retainer with the retainer is fixed.

The above information disclosed in this Background section is only for enhancement of understanding of the background of the invention and it may therefore contain information that does not form the prior art that is already known to a person of ordinary skill in the art.

According to the present invention, there is provided, an implant structure, comprising: a retainer for fixing a denture structure by combining with the denture structure; a fixing portion comprising a fixture for implantation in an alveolar bone of a gum, and an abutment at an upper portion of the fixture, the abutment connecting the fixture to the retainer, wherein the abutment is integrally formed with the fixture; and a ring-shaped coil spring to provide elastic force to the retainer and the abutment, wherein a seating portion on which the coil spring is seated is formed inside the retainer, and wherein the implant structure is arranged such that different angles between the retainer and the abutment may be configured according to a position of a denture structure fixed to the retainer, and the coil spring is a canted ring-shaped coil spring comprising angled coils that exhibit angular deflection characteristics under pressure.

The present invention is directed to providing an implant structure that is stably fixed with a spring interposed between an abutment and a retainer, and is easy to attach and detach, and having different angles according to the position of the tooth to be attached.

The present invention has an effect that as a spring is interposed between the retainer and the abutment, due to the elastic force of the spring the retainer may be stably coupled to the abutment and at the same time be easily dropped out therefrom.

In addition, it has an effect that since different angles may be configured according to the position of the attached teeth due to the deflectable spring, it prevents a feeling of foreign objects on the attached teeth.

In an embodiment of the present invention, a first protrusion portion may be formed on an upper portion of the abutment so that an inner side of the spring is in contact with the abutment at a lower portion of the first protrusion portion.

In an embodiment of the present invention, a recess portion in which the spring is seated may be formed at an upper portion of the abutment, and an outer side of the spring may be in contact with an inner side surface of the retainer.

In an embodiment of the present invention, the abutment may include a contact portion with which the spring is in contact; a second protrusion portion protruding outwards from the first contact portion at an upper portion of the first contact portion; and a third protrusion portion protruding outwards from the second contact portion at a lower portion of the first contact portion, wherein the inner side of the spring is in contact with the first contact portion, the second protrusion portion, and the third protrusion portion.

In an embodiment of the present invention, a cross section of the spring may be greater than a length of the first contact portion and may be seated on the seating portion.

In an embodiment of the present invention, the spring may be seated in a recess portion formed by the contact portion, the second protrusion portion, and the third protrusion portion.

In an embodiment of the present invention, the abutment may include an upper portion rotatably formed in a spherical shape; a lower portion connecting the upper portion to a body of the fixing portion; and a bent portion in which the spring is disposed between the upper portion and the lower portion, wherein the inner side of the spring may be in contact with the bent portion.

In an embodiment of the present invention, the retainer may have a hollow cylindrical shape, and a portion of the upper portion may protrude outwards from the retainer.

In an embodiment of the present invention, the base material of the spring may include any one or more of copper alloys, stainless steel alloys or titanium, and may be surface-treated.

The above and other aspects, features, and advantages of the present invention will become more apparent to those of ordinary skill in the art by describing embodiments thereof in detail with reference to the accompanying drawings, in which:
FIG. 1a is an exemplary view for explaining the configuration of an implant structure according to an exemplary embodiment of the present invention.
FIG. 1b is an exemplary view for explaining the degree of deflection of a spring of FIG 1a.
FIGS. 2 to 10 are exemplary views for explaining the configuration of an implant structure of further embodiments of the present invention, respectively.

Hereinafter, in order to fully understand the configuration and effects of the present invention, preferred embodiments of the present invention will be described with reference to the accompanying drawings. However, the present invention is not limited to the embodiments disclosed below, and may be embodied in various forms and various modifications may be made. Rather, the description of the present invention is provided so that this disclosure will be thorough and complete and will fully convey the concept of the invention to those of ordinary skill in the art. In the accompanying drawings, the size of the elements is enlarged compared to actual ones for the convenience of description, and the ratio of each element may be exaggerated or reduced.

Terms such as 'first' and 'second' may be used to describe various elements, but, the above elements should not be limited by the terms above. The terms may only be used to differentiate one element from another. For example, without departing from the scope of the present invention, `first element' may be named 'second element' and similarly, 'second element' may also be named `first element.' In addition, expressions in the singular include plural expressions unless explicitly expressed differently in context. Unless otherwise defined, the terminology used in the embodiments of the present invention may be interpreted as meanings commonly known to those of ordinary skill in the art.

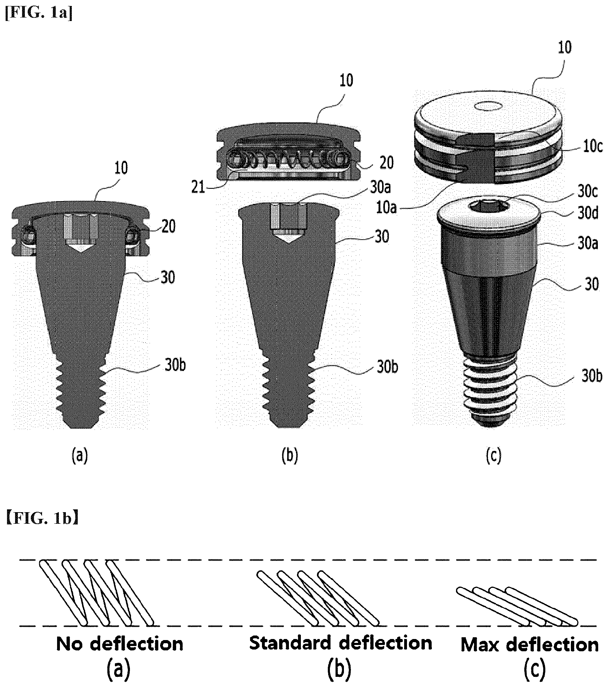

Hereinafter, an implant structure according to an embodiment of the present invention will be described with reference to FIGS. 1a to 10.

FIG. 1a is an exemplary view for explaining the configuration of an implant structure according to an exemplary embodiment of the present invention in which (a) is a sectional view, (b) is a sectional view in which a retainer is separated from a fixing portion, and (c) is an exploded perspective view.

Referring to the above drawings, an implant structure according to an embodiment of the present invention includes a retainer 10, a spring 20 disposed inside the retainer 10, and a fixing portion 30 that is implanted in an alveolar bone and coupled to the retainer 10.

In an embodiment of the present invention, a denture structure is fixed to a gum by the retainer 10, and the denture structure is fitted to the outside of the retainer 10 to be fixed. In this case, the retainer 10 may be inserted inside the denture structure. Hereinafter, this may be the same in the description of each embodiment, and a description thereof will be omitted since it is redundant.

The fixing portion 30 may include an abutment 30a at an upper portion thereof and a fixture 30b at a lower portion thereof. In an embodiment of the present invention, the abutment 30a and the fixture 30b may be integrally configured. A protrusion portion 30d may be formed on the upper portion of the abutment 30a, and the lower portion thereof may be in contact with the inner side of the spring 20.

A hexagonal tool insertion groove 30c to which the tool is fastened when the fixing portion 30 is implanted may be formed on the upper portion of the abutment 30a. However, the tool insertion groove 30c of the present invention is not limited to a hexagonal shape, and a circular or polygonal tool insertion groove 30c may be formed according to the shape of the tool to be fastened.

The retainer 10 may be formed to have a seating portion 10a on which the spring 20 is seated therein so that the upper surface of the seating portion 10a of the retainer 10 and the upper surface of the abutment 30a may contact each other.

The outer surface of the retainer 10 may have an uneven portion 10c outside to facilitate removal of a tooth-shaped crown, and a cut portion 10c formed on one side so that an operator can easily rotate the retainer 10.

The spring 20 is a canted ring-shaped coil spring, and may be configured to attenuate shock or vibration to absorb shock or vibration applied to the retainer 10 and the fixing portion 30. The spring 20 according to an embodiment of the present invention may provide improved contact performance and a longer lifespan. The spring 20 may be independently deflected to compensate for contact and surface fluctuations, thereby allowing tolerances between mating parts.

FIG. 1b is an exemplary view for explaining the degree of deflection of the spring 20 in which (a) is a case where there is no deflection, (b) is a case of a standard deflection, and (c) is a case of a maximum deflection.

As shown in the drawings, the spring 20 according to an embodiment of the present invention may be a canted coil and exhibit deflection characteristics under pressure. Each angled coil may create a radial or axial force for a uniform load around the entire spring radius. In this case, the pressure may be about 1N to 50N, and a change in angle may represent a movement of 1 to 40 degrees. However, this pressure corresponds to a case where one implant structure of an embodiment of the present invention is used, and if two or more implant structures are used to fix the denture structure are used, the pressure may increase.

The spring 20 of an embodiment of the present invention is deformed as shown in (a) to (c) of FIG. 1b due to change of the deflection according to the contact between the retainer 10 and the abutment 30a, thereby capable of responding efficiently to changes in pressure, and also responding efficiently to changes in tolerance.

In an embodiment of the present invention, the base material of the spring 20 may include any one or more of various copper alloys, stainless steel alloys or titanium, and may be surface-treated.

In an embodiment of the present invention, the cross section of the coil of the spring 20 is shown as circular, but it is not limited thereto, and a deflected spring having a different angle at which the denture structure is laid may be selected according to the position of the patient's tooth, and the spacing of the protrusion portions 30d may be determined by this spring. Alternatively, the cross section may be deformed into an elliptical shape due to the occurrence of deflection according to the distance between the seating portion 10a of the retainer 10 and the protrusion portion 30d of the abutment 30a.

The spring 20 is disposed on the seating portion 10a of the retainer 10, and the protrusion portion 30d of the abutment 30a may be configured to be disposed on the upper portion of the spring 20. In this configuration, the spring 20 may provide an elastic force to the retainer 10 and the abutment 30a, whereby it may be configured that the retainer 10 may be stably coupled to the abutment 30a and at the same time be easily dropped out therefrom. In addition, since different angles may be configured according to the position of the attached teeth due to the deflectable spring 20, it may be possible to prevent a feeling of foreign objects on the attached teeth.

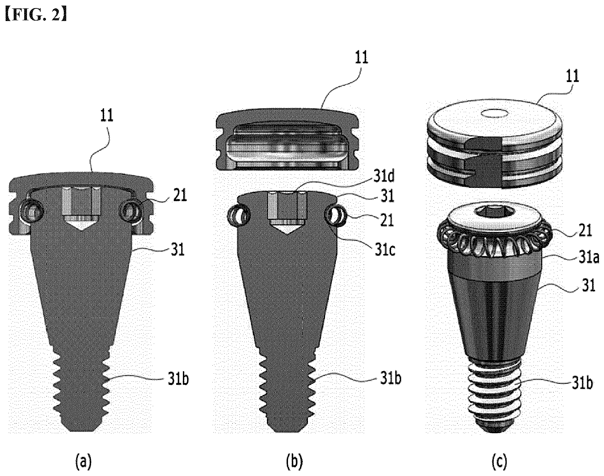

FIG. 2 is an exemplary view for explaining the configuration of an implant structure according to another embodiment of the present invention in which (a) is a sectional view, (b) is a sectional view in which a retainer is separated from a fixing portion, and (c) is an exploded perspective view. Description of the same configuration as in FIG. 1a will be omitted.

Referring to the above drawings, an implant structure according to an embodiment of the present invention includes a retainer 11, a spring 21 and a fixing portion 31 that is implanted in an alveolar bone and coupled to the retainer 11.

The fixing portion 31 may be formed by integrally forming an upper abutment 31a and a lower fixture 31b, wherein a recess portion 31c having a recess shape in which the spring 21 is seated may be formed on the abutment 31a.

In an embodiment of the present invention, the upper surface of the abutment 31a and the upper surface of the inner side of the retainer 11 may be configured to contact each other, and the outer side of the spring 21 seated in the recess portion 31c may be configured to contact the inner side surface of the retainer 11.

The retainer 11 may be coupled to the abutment 31a while the spring 21 is seated in the recess portion 31c of the abutment 31a, and it may be configured that due to the elastic force of the spring 21 the retainer 11 may be stably coupled to the abutment 31a and at the same time be easily dropped out therefrom. In addition, since different angles may be configured according to the position of the attached teeth due to the deflectable spring 21, it may be possible to prevent a feeling of foreign objects on the attached teeth.

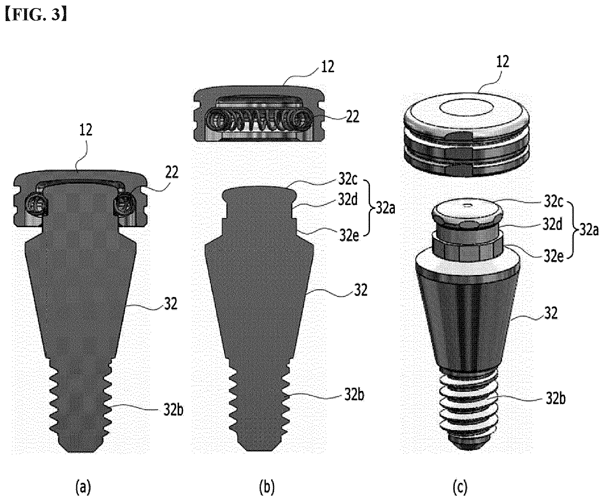

FIG. 3 is an exemplary view for explaining the configuration of an implant structure according to another embodiment of the present invention in which (a) is a sectional view, (b) is a sectional view in which a retainer is separated from a fixing portion, and (c) is an exploded perspective view. Description of the same configurations as in FIG 1 will be omitted.

The fixing portion 32 may be formed by integrally forming an upper abutment 32a and a lower fixture 32b, wherein the abutment 32a may include a contact portion 32d with which a spring 22 disposed on the seating portion 12a of the retainer 12 is in contact, and a first protrusion portion 32c and a second protrusion portion 32e protruding outwards therefrom.

The inside of the spring 22 may contact the contact portion 32d, the first protrusion portion 32c, and the second protrusion portion 32e, and the size of the cross section of the spring 22 may be greater than the length of the contact portion 32d. In addition, the upper surface of the first protrusion portion 32c and the upper surface of the inner side of the retainer 12 may be configured to contact each other, and the second protrusion portion 32e may be formed having a polygonal shape cross section so that an operator may easily rotate it.

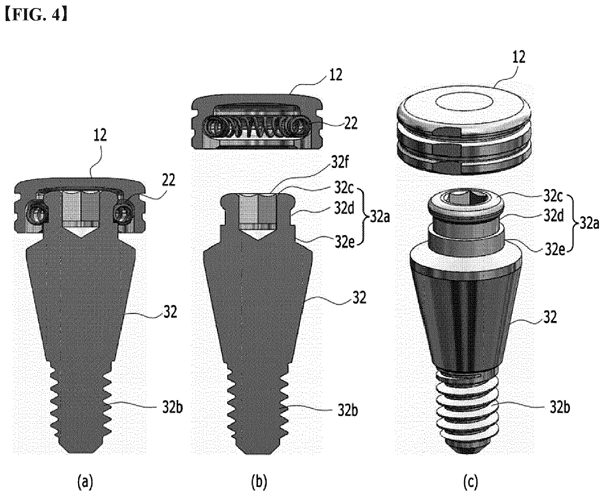

FIG. 4 is an exemplary view for explaining the configuration of an implant structure according to another embodiment of the present invention in which (a) is a sectional view, (b) is a sectional view in which a retainer is separated from a fixing portion, and (c) is an exploded perspective view. Description of the same configurations as in FIG 3 will be omitted.

Referring to the above drawings, in an embodiment of the present invention, a tool insertion groove 32f to which the tool is fastened when implanted may be formed on the upper portion of the abutment 32a. Other configurations are the same as in FIG. 3, and thus detailed descriptions thereof will be omitted.

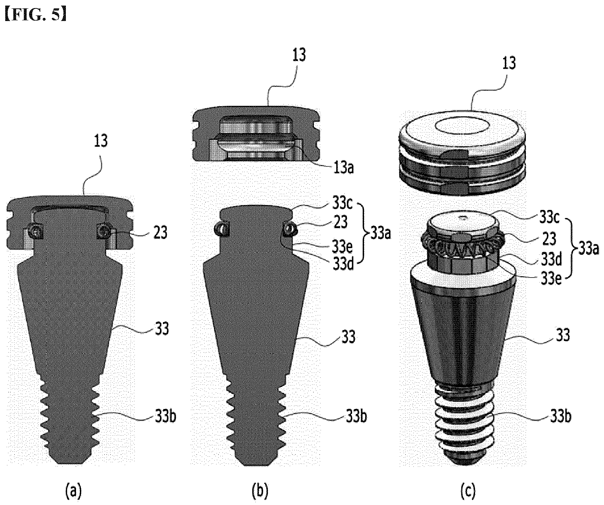

FIG. 5 is an exemplary view for explaining the configuration of an implant structure according to another embodiment of the present invention in which (a) is a sectional view, (b) is a sectional view in which a retainer is separated from a fixing portion, and (c) is an exploded perspective view.

Referring to the above drawings, the fixing portion 33 may be formed by integrally forming an upper abutment 33a and a lower fixture 33b, wherein the abutment 33a may include a contact portion 33d that a spring 23 contacts, and a first protrusion portion 33c protruding outwards therefrom and a second protrusion portion 33e protruding outwards from the lower portion thereof.

The spring 23 may be seated in the recess portion formed by the contact portion 33d, the first protrusion 33c, and the second protrusion 33e, and the upper surface of the first protrusion portion 33c may be disposed to contact the upper surface of the inner side of the retainer 13. In this embodiment, the cross section of the spring 23 may be configured to be substantially the same as the length of the contact portion 33d.

The spring 23 seated in the recess portion may be in contact with the inner side of the retainer 13.

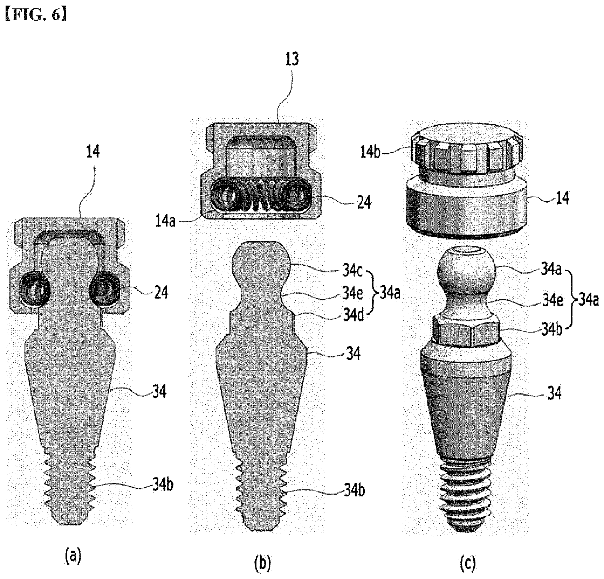

FIG. 6 is an exemplary view for explaining the configuration of an implant structure according to another embodiment of the present invention in which (a) is a sectional view, (b) is a sectional view in which a retainer is separated from a fixing portion, and (c) is an exploded perspective view.

As shown in the drawings, the fixing portion 34 may be formed by integrally forming an abutment 34a and a lower fixture 34b, wherein the abutment 34a may include an upper portion 34c rotatably formed in a spherical shape inside the retainer 14 and a lower portion 34d connecting the upper portion 34c to the body of the fixing portion 34.

The retainer 14 may have a seating portion 14a on which the spring 24 is seated therein, and an uneven portion 14b outside thereof for an operator to easily rotate it.

A bent portion 34e which the inner side of the spring 24 contacts may be formed between the upper portion 34c and the lower portion 34d of the abutment 34a so that the bent portion 34e and the spring 24 may contact when the abutment 34a is inserted into the retainer 14.

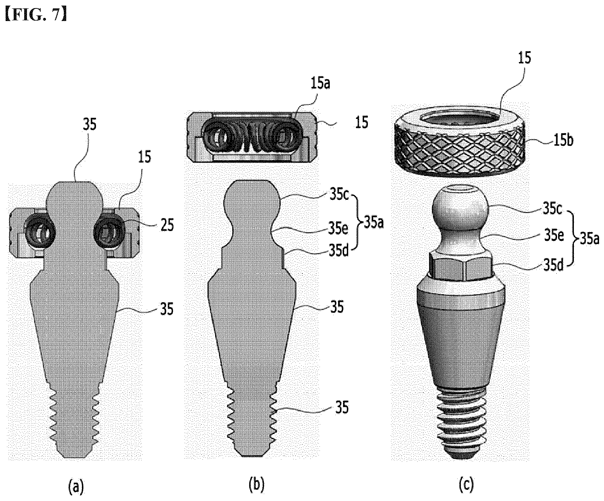

FIG. 7 is an exemplary view for explaining the configuration of an implant structure according to another embodiment of the present invention in which (a) is a sectional view, (b) is a sectional view in which a retainer is separated from a fixing portion, and (c) is an exploded perspective view, which is the same as the embodiment of FIG. 6 except for the configuration of the retainer 15.

Referring to the above drawings, the retainer 15 may be formed in a hollow cylindrical shape, and have a seating portion 15a on which the spring 25 is seated therein and an uneven portion 15b outside thereof for an operator to easily rotate it.

It may be configured that when the retainer 15 is coupled to the abutment 35a, the upper portion 35c of the abutment 35a protrudes outwards the retainer 15.

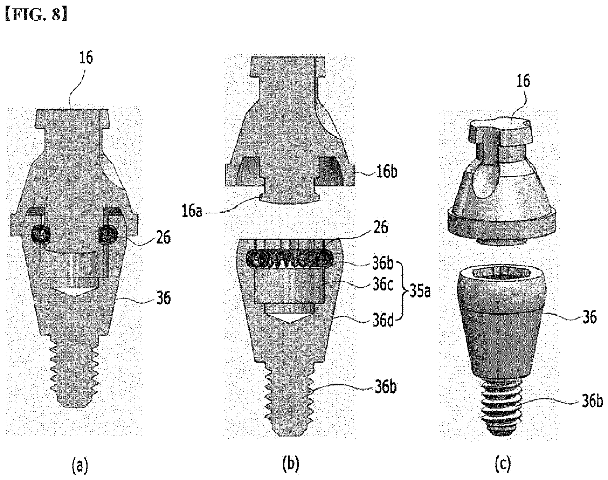

FIG. 8 is an exemplary view for explaining the configuration of an implant structure according to another embodiment of the present invention in which (a) is a sectional view, (b) is a sectional view in which a retainer is separated from a fixing portion, and (c) is an exploded perspective view. An embodiment of FIG. 8 shows an example in which a spring is seated on an abutment.

As shown in the drawings, the fixing portion 36 may be formed by integrally forming an abutment 36a and a lower fixture 36b, and in an embodiment of the present invention, the retainer 16 may have a protrusion portion 16a coupled to a fastening groove 36d of the abutment 36a and a seating portion 36c on which the spring 26 is seated, on the upper portion of the fastening groove 36d. In addition, a fastening portion 16b disposed to surround the outer surface of the abutment 36a may be formed on the outer surface of the retainer 16. The upper portion of the retainer 16 may be formed in various shapes so that an operator can easily rotate it.

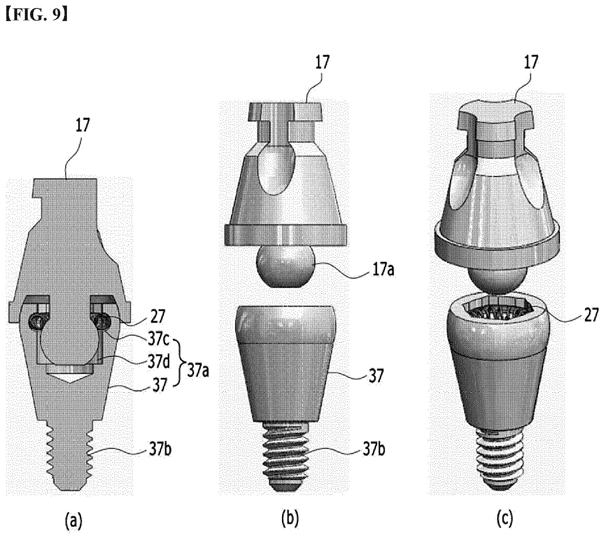

FIG. 9 is an exemplary view for explaining the configuration of an implant structure according to another embodiment of the present invention in which (a) is a sectional view, (b) is a sectional view in which a retainer is separated from a fixing portion, and (c) is an exploded perspective view. An embodiment of FIG. 9 shows an example in which a spring is seated on an abutment, as in the embodiment of FIG. 8.

Referring to the above drawings, the fixing portion 37 may be formed by integrally forming an abutment 37a and a lower fixture 37b, and in an embodiment of the present invention, the retainer 17 may have a protrusion portion 17a coupled to a fastening groove 37d of the abutment 37a and a seating portion 37c on which the spring 27 is seated, on the upper portion of the fastening groove 37d. In an embodiment of the present invention, the protrusion portion 17a may have a spherical shape to facilitate rotation.

Meanwhile, in the description of an embodiment of the present invention, a configuration in which a single spring is formed alone has been discussed, but the present invention is not limited thereto, and a plurality of springs may be disposed to further increase the pressure.

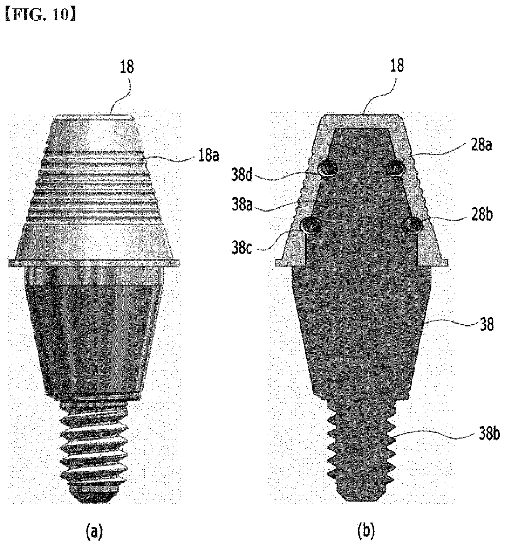

FIG. 10 is for explaining this, an exemplary view for explaining the configuration of an implant structure according to another embodiment of the present invention in which (a) is a font view of the implant structure according to an embodiment of the present invention and (b) is a sectional view.

Referring to the above drawings, the fixing portion 38 may be formed by integrally forming an abutment 38a and a lower fixture 38b, and in an embodiment of the present invention, an uneven portion 18a may be formed on the outer surface of the retainer 18 so that an operator can easily rotate it.

In addition, the abutment 38a of the present invention may have a first seating portion 38d and a second seating portion 38c on which a first spring 28a and a second spring 28b are seated.

With such a configuration, an implant structure in which pressure is further strengthened by a plurality of springs may be provided.

In an embodiment of the present invention, various shapes of a retainer are introduced, but a retainer having another shape configured in a shape capable of seating the spring of the present invention may be applied by an embodiment of the present invention. In addition, in an embodiment of the present invention, abutments having various shapes have been introduced, but various shapes of abutments capable of seating a spring in combination with a retainer may be applied.

In addition, in an embodiment of the present invention, A configuration in which one or two springs are seated on the retainer or abutment is described, but the present invention is not limited thereto, and it will be possible that a plurality of springs may be seated on the retainer or abutment.

As described above, as a spring is interposed between a retainer and an abutment, it may be configured that due to the elastic force of the spring the retainer may be stably coupled to the abutment and at the same time be easily dropped out therefrom. In addition, since different angles may be configured according to the position of the attached teeth due to the deflectable spring, it may be possible to prevent a feeling of foreign objects on the attached teeth.

## Claims

1. An implant structure, comprising:
a retainer (10) for fixing a denture structure by combining with the denture structure;
a fixing portion (30) comprising a fixture (30b) for implantation in an alveolar bone of a gum, and an abutment (30a) at an upper portion of the fixture (30b), wherein the abutment (30a) connects the fixture (30b) to the retainer (10), and the abutment (30a) is integrally formed with the fixture (30b); and
a ring-shaped coil spring (20) to provide elastic force to the retainer (10) and the abutment (30a), wherein a seating portion on which the coil spring (20) is seated is formed inside the retainer (10),
wherein
the implant structure is arranged such that different angles between the retainer (10) and the abutment (30a) may be configured according to a position of a denture structure fixed to the retainer, **characterised in that** the coil spring (20) is a canted ring-shaped coil spring comprising angled coils that exhibit angular deflection characteristics under pressure.

2. The implant structure of claim 1, wherein a first protrusion portion (30d) is formed on an upper portion of the abutment (30a) so that an inner side of the coil spring (20) is in contact with the abutment (30a) at a lower portion of the first protrusion portion (30d).

3. The implant structure of claim 1, wherein a recess portion (31c) in which the coil spring (21) is seated is formed at an upper portion of the abutment (30a), and an outer side of the coil spring (21) is in contact with an inner side surface of the retainer (11).

4. The implant structure of claim 1, wherein the abutment (30a) comprises a contact portion (32d, 33d) with which the coil spring (22, 23) is in contact; a first protrusion portion (32c, 33c) protruding outwards from the contact portion (32d, 33d) at an upper portion of the contact portion (32d, 33d); and a second protrusion portion (32e, 33e) protruding outwards from the contact portion (32d, 33d) at a lower portion of the contact portion (32d, 33d), wherein the inner side of the coil spring (22, 23) is in contact with the contact portion (32d, 33d), the first protrusion portion (32c, 33c), and the second protrusion portion (32e, 33e).

5. The implant structure of claim 4, wherein a cross section of the coil spring (22) is greater than a length of the contact portion (32d) and is seated on the seating portion (12a).

6. The implant structure of claim 4, wherein the coil spring (23) is seated in a recess portion formed by the contact portion (33d), the first protrusion portion (33c), and the second protrusion portion (33e).

7. The implant structure of claim 1, wherein the abutment (34a) comprises an upper portion (34c) rotatably formed in a spherical shape; a lower portion (34d) connecting the upper portion (34c) to a body of the fixing portion (34); and a bent portion (34e) in which the coil spring (20) is disposed between the upper portion (34c) and the lower portion (34d), wherein the inner side of the coil spring (20) is in contact with the bent portion (34e).

8. The implant structure of claim 7, wherein the retainer (10) has a hollow cylindrical shape, and a portion of the upper portion (34c) protrudes outwards from the retainer (10).

9. The implant structure of claim 1, wherein a base material of the coil spring (20) comprises any one or more of copper alloys, stainless steel alloys or titanium, and can be surface-treated.

## Patentansprüche

1. Implantatstruktur, die umfasst:
einen Halter (10) zur Fixierung einer Zahnprothesenstruktur durch Kombination mit der Zahnprothesenstruktur;
einen Befestigungsabschnitt (30), der eine Halterung (30b) zur Implantation in einen Alveolarknochen eines Zahnfleisches umfasst, und ein Widerlager (30a) an einem oberen Abschnitt der Halterung (30b), wobei das Widerlager (30a) die Halterung (30b) mit dem Halter (10) verbindet und das Widerlager (30a) einstückig mit der Halterung (30b) gebildet ist; und
eine ringförmige Schraubenfeder (20), um eine elastische Kraft auf den Halter (10) und das Widerlager (30a) auszuüben, wobei ein Sitzabschnitt, auf dem die Schraubenfeder (20) sitzt, im Inneren des Halters (10) gebildet ist,
wobei die Implantatstruktur so ausgelegt ist, dass unterschiedliche Winkel zwischen dem Halter (10) und dem Widerlager (30a) entsprechend einer Position einer am Halter befestigten Zahnprothesenstruktur konfiguriert werden können, **dadurch gekennzeichnet, dass** die Schraubenfeder (20) eine gekantete ringförmige Schraubenfeder ist, die abgewinkelte Windungen umfasst, die unter Druck eine winklige Biegecharakteristik aufweisen.

2. Implantatstruktur nach Anspruch 1, wobei ein erster vorstehender Abschnitt (30d) an einem oberen Abschnitt des Widerlagers (30a) gebildet ist, so dass eine Innenseite der Schraubenfeder (20) an einem unteren Abschnitt des ersten vorstehenden Abschnitts (30d) in Kontakt mit dem Widerlager (30a) steht.

3. Implantatstruktur nach Anspruch 1, wobei ein Aussparungsabschnitt (31c), in dem die Schraubenfeder (21) sitzt, an einem oberen Abschnitt des Widerlagers (30a) gebildet ist und eine Außenseite der Schraubenfeder (21) mit einer inneren Seitenfläche des Halters (11) in Kontakt steht.

4. Implantatstruktur nach Anspruch 1, wobei das Widerlager (30a) umfasst:
einen Kontaktabschnitt (32d, 33d), mit dem die Schraubenfeder (22, 23) in Kontakt ist;
einen ersten vorstehenden Abschnitt (32c, 33c), der von dem Kontaktabschnitt (32d, 33d) an einem oberen Abschnitt des Kontaktabschnitts (32d, 33d) nach außen vorsteht;
und einen zweiten vorstehenden Abschnitt (32e, 33e), der von dem Kontaktabschnitt (32d, 33d) an einem unteren Abschnitt des Kontaktabschnitts (32d, 33d) nach außen vorsteht, wobei die Innenseite der Schraubenfeder (22, 23) in Kontakt mit dem Kontaktabschnitt (32d, 33d), dem ersten vorstehenden Abschnitt (32c, 33c) und dem zweiten vorstehenden Abschnitt (32e, 33e) ist.

5. Implantatstruktur nach Anspruch 4, wobei ein Querschnitt der Schraubenfeder (22) größer als eine Länge des Kontaktabschnitts (32d) ist und auf dem Sitzabschnitt (12a) sitzt.

6. Implantatstruktur nach Anspruch 4, wobei die Schraubenfeder (23) in einem durch den Kontaktabschnitt (33d), den ersten vorstehenden Abschnitt (33c) und den zweiten vorstehenden Abschnitt (33e) gebildeten Aussparungsabschnitt sitzt.

7. Implantatstruktur nach Anspruch 1, wobei die Halterung (34a) umfasst:
einen oberen Abschnitt (34c), der drehbar in einer kugelförmigen Form gebildet ist;
einen unteren Abschnitt (34d), der den oberen Abschnitt (34c) mit einem Körper des Befestigungsabschnitts (34) verbindet; und einen gebogenen Abschnitt (34e), in dem die Schraubenfeder (20) zwischen dem oberen Abschnitt (34c) und dem unteren Abschnitt (34d) angeordnet ist, wobei die Innenseite der Schraubenfeder (20) in Kontakt mit dem gebogenen Abschnitt (34e) ist.

8. Implantatstruktur nach Anspruch 7, wobei die Halterung (10) eine hohlzylindrische Form aufweist und ein Abschnitt des oberen Abschnitts (34c) aus der Halterung (10) nach außen ragt.

9. Implantatstruktur nach Anspruch 1, wobei ein Basismaterial der Schraubenfeder (20) eine oder mehrere Kupferlegierungen, Edelstahllegierungen oder Titan umfasst und oberflächenbehandelt werden kann.

## Revendications

1. Structure d'implant, comprenant :
un élément de retenue (10) pour fixer une structure de prothèse dentaire en se combinant avec la structure de prothèse dentaire ;
une portion de fixation (30) comprenant une fixation (30b) pour une implantation dans un os alvéolaire d'une gencive, et une butée (30a) au niveau d'une portion supérieure de la fixation (30b), dans laquelle la butée (30a) relie la fixation (30b) à l'élément de retenue (10), et la butée (30a) est formée d'un seul tenant avec la fixation (30b) ; et
un ressort hélicoïdal (20) en forme d'anneau pour fournir une force élastique à l'élément de retenue (10) et à la butée (30a), dans laquelle une portion de siège sur laquelle siège le ressort hélicoïdal (20) est formée à l'intérieur de l'élément de retenue (10),
dans laquelle la structure d'implant est agencée de telle sorte que différents angles entre l'élément de retenue (10) et la butée (30a) peuvent être configurés selon une position d'une structure de prothèse dentaire fixée à l'élément de retenue, **caractérisée en ce que** le ressort hélicoïdal (20) est un ressort hélicoïdal en forme d'anneau incliné comprenant des spires inclinées qui présentent des caractéristiques de déformation angulaire sous pression.

2. Structure d'implant selon la revendication 1, dans laquelle une première portion de protubérance (30d) est formée sur une portion supérieure de la butée (30a) de sorte qu'une face interne du ressort hélicoïdal (20) est en contact avec la butée (30a) au niveau d'une portion inférieure de la première portion de protubérance (30d).

3. Structure d'implant selon la revendication 1, dans laquelle une portion d'évidement (31c) dans laquelle siège le ressort hélicoïdal (21) est formée au niveau d'une portion supérieure de la butée (30a), et un côté externe du ressort hélicoïdal (21) est en contact avec une surface de côté interne de l'élément de retenue (11).

4. Structure d'implant selon la revendication 1, dans laquelle la butée (30a) comprend une portion de contact (32d, 33d) avec laquelle le ressort hélicoïdal (22, 23) est en contact ; une première portion de protubérance (32c, 33c) faisant saillie vers l'extérieur à partir de la portion de contact (32d, 33d) au niveau d'une portion supérieure de la portion de contact (32d, 33d) ; et une deuxième portion de protubérance (32e, 33e) faisant saillie vers l'extérieur à partir de la portion de contact (32d, 33d) au niveau d'une portion inférieure de la portion de contact (32d, 33d), dans laquelle le côté interne du ressort hélicoïdal (22, 23) est en contact avec la portion de contact (32d, 33d), la première portion de protubérance (32c, 33c), et la deuxième portion de protubérance (32e, 33e).

5. Structure d'implant selon la revendication 4, dans laquelle la section transversale du ressort hélicoïdal (22) est plus grande qu'une longueur de la portion de contact (32d) et siège sur la portion de siège (12a).

6. Structure d'implant selon la revendication 4, dans laquelle le ressort hélicoïdal (23) siège dans une portion d'évidement formée par la portion de contact (33d), la première portion de protubérance (33c), et la deuxième portion de protubérance (33e).

7. Structure d'implant selon la revendication 1, dans laquelle la butée (34a) comprend une portion supérieure (34c) formée rotative sous une forme sphérique ; une portion inférieure (34d) reliant la portion supérieure (34c) à un corps de la portion de fixation (34) ; et une portion courbée (34e) dans laquelle le ressort hélicoïdal (20) est disposé entre la portion supérieure (34c) et la portion inférieure (34d), dans laquelle le côté interne du ressort hélicoïdal (20) est en contact avec la portion courbée (34e).

8. Structure d'implant selon la revendication 7, dans laquelle l'élément de retenue (10) a une forme cylindrique creuse, et une portion de la portion supérieure (34c) fait saillie vers l'extérieur à partir de l'élément de retenue (10).

9. Structure d'implant selon la revendication 1, dans laquelle un matériau de base du ressort hélicoïdal (20) comprend un ou plusieurs quelconques parmi des alliages de cuivre, des alliages d'acier inoxydable ou du titane, et peut être traité en surface.
